# DEMANDE DE BREVET EUROPEEN

(11) **EP 2 747 444 A1**
(43) Date de publication de la demande: **25.06.2014**
(21) Numéro de dépôt: 13196371.2
(22) Date de dépôt: 10.12.2013
(51) Int. Cl.: H04N 21/4784, H04N 21/41, H04N 21/472, H04N 21/258, H04N 21/45, H04N 21/441, H04N 21/418, H04N 21/81, H04N 21/426

(54) **Procédé pour accéder à un service proposé par un serveur distant à l'aide d'un code QR**

(30) Priorité: 18.12.2012 FR 1262235
(71) Demandeur: Neotion, 13685 Aubagne (FR)
(72) Inventeur: GENEVOIS, Christophe, 13830 LA BEDOULE (FR)
(74) Mandataire: Roman, Alexis

(57) **Abrégé**

L'invention concerne un procédé pour accéder à un service proposé par un serveur distant, lequel serveur est configuré pour émettre un flux d'informations numériques à destination d'un récepteur numérique, ledit procédé comprend les étapes consistant à :
- intégrer dans une carte à puce des droits d'accès propres à un utilisateur,
- associer de manière exclusive la carte à puce et le récepteur numérique,
- connecter la carte à puce au récepteur numérique de sorte que ledit récepteur traite le flux d'informations numériques en fonction des droits intégrés dans ladite carte,
- générer un Code QR et le coder avec : - l'adresse URL du serveur distant, - des identifiants associés au récepteur et à la carte à puce, - les instructions pour accéder au service proposé,
- afficher le Code QR sur un écran,
- scanner le Code QR,
- déchiffrer le Code QR pour connecter automatiquement le terminal à l'adresse URL du serveur distant et le transfert à ce dernier, des données numériques concernant : les identifiants associés au récepteur et à la carte à puce et les instructions pour accéder au service proposé,
- vérifier les identifiants associés à la carte à puce et au récepteur,
- accéder au service proposé par le serveur distant après avoir contrôlé que l'identifiant de la carte à puce est bien associé à l'identifiant du récepteur numérique.

## Description

### Domaine technique de l'invention.

L'invention a pour objet un procédé pour accéder à un service proposé par un serveur distant.

Elle concerne le domaine technique général des systèmes d'accès à un service lié à des programmes de télévision numérique et notamment, mais non exclusivement, des programmes payants.

### État de la technique.

Les programmes de télévision numériques payants sont protégés par des systèmes d'accès conditionnels composés de deux éléments principaux : le récepteur numérique (ou décodeur) et la carte à puce qui contient les droits d'accès propre à chaque utilisateur.

Afin de sécuriser ces systèmes d'accès, et d'éviter de propager les informations échangées entre la carte et le récepteur, chaque carte est associée de manière exclusive avec un unique récepteur. En pratique, un identifiant unique associé au récepteur est couplé à un identifiant unique associé à la carte. Ce mécanisme d'association exclusive est généralement désigné par le terme anglais « pairing ». Pour accéder à un service proposé par un serveur distant (acquisitions de droits, renouvellement d'abonnement, ...), il est nécessaire de communiquer au serveur un identifiant unique associé au récepteur et un identifiant unique associé à la carte, afin de permettre audit serveur de diffuser un message unique (ou clé de déchiffrement) à la carte lui permettant de communiquer de manière unique avec le récepteur. Cela permet d'éviter la technique du « partage de mots de contrôle », plus connue par le terme anglais « Card sharing » qui consiste à permettre à plusieurs utilisateurs d'accéder aux chaînes de télévision payantes à partir d'une seule carte à puce mise en partage. En partageant la clé de déchiffrement délivrée par cette carte, tous les destinataires obtiennent les droits d'accès associé à ladite carte.

Cette procédure de « pairing » peut se faire en usine (à condition que le récepteur et la carte soient livrés en même temps), mais ne résout pas le cas où la carte doit être changée. Dans ce cas, l'utilisateur final peut être contraint de joindre un centre d'appel (ou « call center » en anglais) et communiquer les identifiants du récepteur et de la carte, afin de pouvoir initialiser le service. Cette opération est non seulement fastidieuse pour l'utilisateur, mais représente un coût financier non négligeable pour l'opérateur.

Dans d'autres cas, les programmes de télévision numériques payants sont parfois proposés sans engagement ou en mode prépayé, c'est-à-dire que les droits d'accès aux programmes ne sont ni contractualisés, ni renouvelables automatiquement tous les mois. Pour effectuer le renouvellement, l'utilisateur doit communiquer les identifiants du récepteur et/ou de la carte, puis prépayer le mois à venir pour recevoir le nouveau droit dans la carte. Ce schéma s'applique aussi pour le paiement à la séance. Là aussi, la procédure est compliquée pour l'utilisateur et chère pour l'opérateur.

L'invention vise à remédier à cet état des choses. En particulier, un objectif de l'invention est de simplifier et rendre plus rapide l'accès à des services proposés par le serveur distant.

### Divulgation de l'invention.

La solution proposée par l'invention est un procédé pour accéder à un service proposé par un serveur distant, lequel serveur est configuré pour émettre un flux d'informations numériques à destination d'un récepteur numérique d'un téléviseur numérique, ledit récepteur étant associé à un identifiant unique, ledit procédé comprend les étapes consistant à :
- intégrer dans une carte à puce des droits d'accès propres à un utilisateur, laquelle carte est associée à un identifiant unique,
- associer de manière exclusive la carte à puce et le récepteur numérique de manière à ce que ladite carte puisse uniquement communiquer avec ledit récepteur, l'identifiant unique de ladite carte étant associé à l'identifiant unique dudit récepteur,
- connecter la carte à puce au récepteur numérique de sorte que ledit récepteur traite le flux d'informations numériques en fonction des droits intégrés dans ladite carte.
- Ce procédé est remarquable en ce qu'il comprend en outre les étapes suivantes :
- générer un Code QR en exécutant les instructions d'un programme enregistré dans le récepteur numérique, et en codant ledit Code QR avec : - l'adresse URL du serveur distant, - les identifiants associés au récepteur et à la carte à puce, - les instructions pour accéder au service proposé par ledit serveur distant, lesdits identifiants et lesdites instructions se présentant sous forme de données numériques,
- afficher le Code QR généré sur un écran du téléviseur numérique,
- scanner le Code QR affiché sur l'écran par l'intermédiaire d'un terminal mobile,
- déchiffrer le Code QR scanné en exécutant les instructions d'un programme enregistré dans le terminal mobile, lequel déchiffrage entrainant la connexion automatique dudit terminal à l'adresse URL du serveur distant et le transfert à ce dernier, des données numériques concernant : les identifiants associés au récepteur et à la carte à puce et les instructions pour accéder au service proposé,
- vérifier, dans le serveur distant, les identifiants associés à la carte à puce et au récepteur numérique,
- accéder au service proposé par le serveur distant après avoir contrôlé que l'identifiant unique de la carte à puce est bien associé à l'identifiant unique du récepteur numérique, ou émettre un message d'erreur audit récepteur et/ou au terminal mobile si les identifiants ne correspondent pas.

En scannant le Code QR avec son terminal mobile (typiquement un Smartphone), ce dernier se connecte automatiquement à l'adresse URL du serveur distant, et fournit les renseignements attendus pour la mise en oeuvre du service. Cette technique permet de simplifier et d'automatiser les systèmes d'accès décrits précédemment.

Un autre aspect de l'invention concerne un système d'accès à un service proposé par un serveur distant, lequel serveur est configuré pour émettre un flux d'informations numériques à destination d'un récepteur numérique d'un téléviseur numérique, ledit récepteur étant associé à un identifiant unique, ledit système comprenant :
- une carte à puce dans laquelle sont intégrés des droits d'accès propres à un utilisateur, laquelle carte est associée à un identifiant unique, laquelle carte est associée au récepteur numérique de manière à ce que ladite carte puisse uniquement communiquer avec ledit récepteur, l'identifiant unique de ladite carte étant associé à l'identifiant unique dudit récepteur,
- un moyen pour connecter la carte à puce au récepteur numérique de sorte que ledit récepteur traite le flux d'informations numériques en fonction des droits intégrés dans ladite carte,
- le récepteur numérique comprend :
   o un moyen pour générer un Code QR, et pour le coder avec : - l'adresse URL du serveur distant, - les identifiants associés au récepteur et à la carte à puce, - les instructions pour accéder au service proposé par ledit serveur distant, lesdits identifiants et lesdites instructions se présentant sous forme de données numériques,
   o un moyen pour afficher le Code QR généré sur un écran du téléviseur numérique,
- un terminal mobile comprenant :
   o un moyen pour scanner le Code QR affiché sur l'écran,
   o un moyen pour déchiffrer le Code QR scanné,
   o un moyen pour connecter automatiquement le terminal à l'adresse URL du serveur distant et pour transfert à ce dernier, des données numériques concernant : les identifiants associés au récepteur et à la carte à puce et les instructions pour accéder au service proposé,
- le serveur distant comprenant un moyen pour vérifier les identifiants associés à la carte à puce et au récepteur numérique, l'accès au service proposé par ledit serveur étant réalisé après avoir contrôlé que l'identifiant unique de la carte à puce est bien associé à l'identifiant unique du récepteur numérique, un message d'erreur étant émit par ledit serveur audit récepteur et/ou au terminal mobile si les identifiants ne correspondent pas.

### Description des figures.

D'autres avantages et caractéristiques de l'invention apparaîtront mieux à la lecture de la description d'un mode de réalisation préféré qui va suivre, en référence aux dessins annexés, réalisés à titre d'exemples indicatifs et non limitatifs et sur lesquels :
- la figure 1 schématise un système pour la mise en oeuvre du procédé objet de l'invention,
- la figure 2 schématise un autre système pour la mise en oeuvre du procédé objet de l'invention,
- la figure 3 représente un diagramme temporel présentant les occurrences d'un signal de synchronisation et d'un signal d'activation.

### Modes de réalisation de l'invention.

Le procédé objet de l'invention permet à d'accéder à un service proposé par un serveur distant.

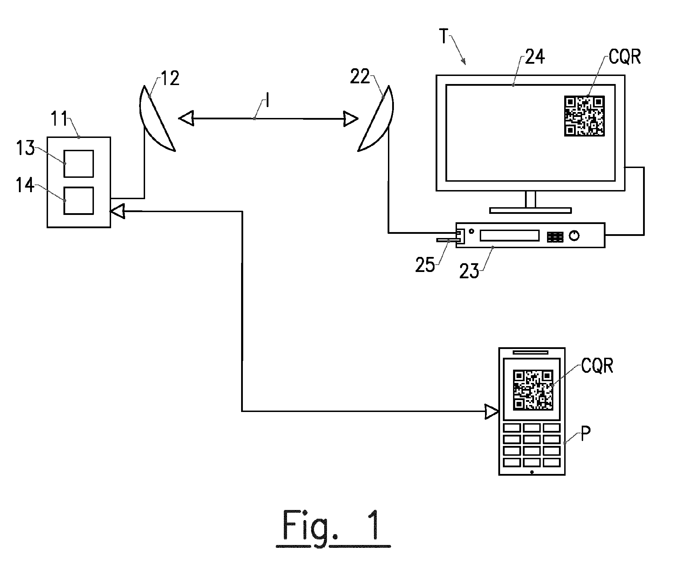

En référence à la figure 1, le serveur distant 11 est configuré pour diffuser, à travers un réseau de télédiffusion, un flux d'informations numériques I comprenant notamment des émissions de télévision. On entend notamment par « réseau de télédiffusion », un réseau sur lequel sont diffusés des contenus audiovisuels par des chaînes de télévision et du type réseau numérique hertzien, réseau satellite, réseau câble, ou autre. On entend notamment par « émission de télévision », tout ou partie d'un contenu audiovisuel diffusé sur une chaîne de télévision, par exemple un film, le journal télévisé, la météo, un jeu télévisé, etc.

Le serveur distant 11 intègre un processeur ou microprocesseur 13, une ou plusieurs mémoires de masse 14 du type flash, magnétique, optique ou autre, et tout autre composant électronique permettant de le faire fonctionner. Un ou plusieurs programmes informatiques sont stockés dans la zone mémoire 14, lesdits programmes comprenant des instructions, qui, lorsqu'elles sont exécutées par le processeur 14, permettent de faire fonctionner l'équipement de diffusion 11, et notamment de réaliser les étapes et/ou fonctionnalités mentionnées ci-après. L'équipement de diffusion 11 comporte en outre un moyen d'émission 12 configuré pour diffuser le flux I au travers du réseau de télédiffusion. Ce moyen d'émission 12 peut se présenter sous la forme d'une antenne, d'une parabole, d'une ligne téléphonique, d'une ligne câblée, connexion internet, etc. Le serveur distant 11 est associé à une adresse URL (pour l'acronyme anglais Uniform Resource Locator). Adresse web, adresse internet, lien internet, adresse réticulaire ou adresse universelle peuvent être employées comme synonyme de adresse URL.

Le serveur 11 émet le flux I à destination d'un dispositif téléviseur T (ci-après « le téléviseur »). Ce dernier est préférentiellement un téléviseur numérique disposant d'une connexion internet et dont la conception est compatible avec un standard permettant aux chaînes de télévision de publier en plus, et en accompagnement de leurs programmes télévisés, des contenus additionnels, et plus particulièrement compatible avec le standard HBBTV (pour l'acronyme anglais « Hybrid Broadcast Broadband TV »).

Le téléviseur T comprend un récepteur numérique 23 configuré pour traiter le flux d'information numérique I diffusé et tous les signaux qu'il intègre. Le récepteur 23 se présente sous la forme d'un décodeur ou d'un boîtier de connexion (type Box ou Set-Top-Box), et comprend un syntoniseur, un démodulateur, un modem, un processeur ou microprocesseur, une ou plusieurs zones mémoires et tout autre composant permettant de le faire fonctionner. En particulier, le récepteur 23 comprend un ou plusieurs programmes stockés dans une de ses zones mémoires, le(s)dit(s) programme(s) comprenant des instructions qui, lorsqu'elles sont exécutées par le processeur dudit récepteur, permettent de réaliser différentes étapes et/ou fonctionnalités décrites ci-après. Le récepteur 23 est associé à une carte à puce 25 contenant des droits d'accès propre à un utilisateur. Ces droits d'accès permettent par exemple à l'utilisateur d'accéder à certaines chaines payantes ou des vidéos, ou d'autres services tels que la réception de mails, etc. Cette carte à puce 25 peut être insérée directement dans le récepteur 23 ou dans un lecteur distinct type boîtier PCMCIA destiné à être inséré dans un port d'interface commune présent sur ledit récepteur, ou encore être intégrée à un boîtier électronique déporté et être reliée audit récepteur par une connexion sans fil (Wifi, Bluetooth, infrarouge, NFC, ou autres) ou par une connexion filaire (USB, Ethernet, ou autres).

Le récepteur 23 et la carte 25 sont tous deux pourvus d'un identifiant unique. Ces données d'identification sont des données numériques enregistrées dans des zones mémoires du récepteur 23 et de la carte 25, et qui peuvent par exemple se présenter sous la forme d'un code numérique, alphabétique ou alphanumérique. Ces données d'identification peuvent également correspondre au nom, prénom et date de naissance de l'utilisateur et/ou à son adresse de courrier électronique et/ou à un numéro unique attribué audit utilisateur et/ou à toutes autres données similaires, par exemple renseignées suite au remplissage d'un formulaire.

Le récepteur 23 est raccordé à un moyen de réception 22 du flux I diffusé, du type antenne, parabole, ligne téléphonique, ligne câblée, connexion internet, ou autres. Le récepteur 23 est en outre associé à un écran 24 du type LCD, plasma, OLED, SED, ou autre, et qui est généralement intégré au téléviseur T.

Le récepteur 23 est adapté pour communiquer avec le serveur distant 11. Le récepteur 23 peut être connecté de manière classique au serveur 11, par l'intermédiaire d'une ligne de communication utilisant un protocole Internet. Le récepteur 23 peut également être pourvu d'un moyen de transfert de type filaire (carte réseau, carte USB, carte HDMI, ou autres) ou sans fil (puce Wifi, puce Bluetooth, puce NFC, émetteur infrarouge, ou autres.).

Lorsque le flux I est reçu par le moyen de réception 22, le récepteur 23 traite ledit flux diffusé en fonction des droits intégrés dans la carte 25. Ce traitement est du type démodulation, décodage, décryptage ou autres. Une fois le flux I traité, tout ou partie de ce dernier est envoyé vers l'écran 24 pour être visualisé et écouté par l'utilisateur.

Conformément à l'invention, le récepteur numérique génère un Code QR qui est codé avec : - l'adresse URL du serveur distant 11, - l'identifiant associé au récepteur 23, - l'identifiant associé la carte à puce 25, - des instructions pour accéder à un service proposé par ledit serveur distant. Ces dernières se présentent sous forme de données numériques. Un Code QR (pour l'acronyme anglais Quick Response) est un code-barres en deux dimensions constitué de modules noirs disposés dans un carré à fond blanc. En pratique, ce Code QR est généré en exécutant les instructions d'un programme enregistré dans le récepteur 23. Plus précisément, le serveur 11 peut intégrer un signal d'activation dans le flux d'informations numériques I. Le Code QR est alors automatiquement généré dès que le récepteur 23 réceptionne ce signal d'activation.

Ce Code QR est ensuite affiché sur l'écran 24 du téléviseur T. Il peut par exemple être affiché dans un coin de l'écran 24 ou être intégré dans un bandeau spécifique incorporant des renseignements. Ces derniers peuvent par exemple consister en des instructions guidant l'utilisateur pour activer le Code QR affiché (par exemple : *« pour accéder à une chaine privée, scanner le Code QR qui apparait sur l'écran* »). L'affichage du Code QR peut être temporaire, c'est-à-dire qu'il disparait automatiquement à l'issue d'un certain délai (par exemple 1 minute), et/ou dès qu'il est activé par l'utilisateur.

Pour activer le Code QR affiché, l'utilisateur doit le scanner (ou le balayer) par l'intermédiaire d'un terminal mobile P. Ce dernier est typiquement un téléphone mobile, un téléphone intelligent (« Smartphone » en anglais), une tablette numérique, etc. L'opération de scannage du Code QR comprend la prise d'une photographie dudit code en actionnant un composant d'appareil photo ou de caméra du terminal mobile P. Le Code QR ainsi scanné est déchiffré (ou lu) en exécutant les instructions d'un programme enregistré dans le terminal P. Ce programme consiste en un logiciel de décodage approprié, par exemple un logiciel embarqué ou téléchargeable depuis un site internet approprié (ApplStore® pour Iphone®, GooglePlay® pour Android®, etc).

Le déchiffrage du Code QR par le terminal P entraine la connexion automatique de ce dernier à l'adresse URL du serveur distant 11 et le transfert, à ce dernier, des données numériques concernant : les identifiants associés au récepteur 23 et à la carte à puce 25 et les instructions pour accéder au service proposé. La connexion entre le terminal P et le serveur 11 est préférentiellement une connexion internet classique établie au travers d'un réseau internet. Pour accroitre la sécurisation, les données sont avantageusement cryptées dans le terminal P avant d'être transférées au serveur 11.

En recevant les différentes données, le serveur 11 vérifie les identifiants associés au récepteur 23 et à la carte à puce 25, après avoir éventuellement décrypté les différentes données. La vérification consiste à contrôler que l'identifiant unique de la carte à puce 25 est bien associé à l'identifiant unique du récepteur 23. Si tel est le cas, le service est activé. Par contre, si les identifiants ne correspondent pas, le service n'est pas activé et le serveur 11 peut émettre un message d'erreur (par exemple sous forme de SMS ou de mail) au récepteur 23 et/ou au terminal P.

L'activation du service peut prendre plusieurs formes. Le serveur 11 peut notamment transférer au récepteur 23 des droits pour que ledit récepteur mette en oeuvre le service proposé, lesquels droits se présentent sous forme de données numériques intégrées dans le flux d'informations numériques I. Il peut s'agir de droits pour le renouvellement automatique d'un abonnement, pour l'accès à une ou plusieurs chaines payantes, pour le visionnage d'une vidéo, pour l'accès à un service mail, etc. A titre d'exemple, le flux d'informations I peut contenir des informations non protégées pouvant pas être normalement affichées sur l'écran 24 du téléviseur T (par exemple des chaines de télévision publiques) et d'autres informations protégées (par exemple des chaines de télévision payantes) ne pouvant pas être normalement affichées sur ledit écran. Le récepteur 23 reçoit l'ensemble de ces données, mais il n'est capable d'afficher que celles qui ne sont pas protégées. L'affichage des informations initialement protégées est alors autorisé en exécutant les instructions d'un programme enregistré dans le récepteur 23 en réponse à la réception des droits par ledit récepteur.

Le serveur 11 peut en outre transférer au récepteur 11 des renseignements pour la mise en oeuvre du service proposé. En pratique, ces renseignements se présentent sous forme de données numériques intégrées dans le flux I. Ces renseignements sont ensuite affichés par le récepteur 23 sur l'écran 24. Il peut s'agir d'une vidéo de démonstration, d'instructions écrites, d'images, etc.

Dans une variante de réalisation, le serveur 11 transfère directement au terminal P des droits pour que ledit terminal met en oeuvre le service proposé. Le transfert des droits est dans ce cas réalisé au travers d'un réseau internet, lesdits droits transférés se présentant sous forme de données numériques. Il peut s'agir de droits pour le téléchargement d'une vidéo depuis le serveur 11 et son visionnage sur le terminal P, de droits pour l'accès à un service spécifique, d'une remise commerciale, etc.

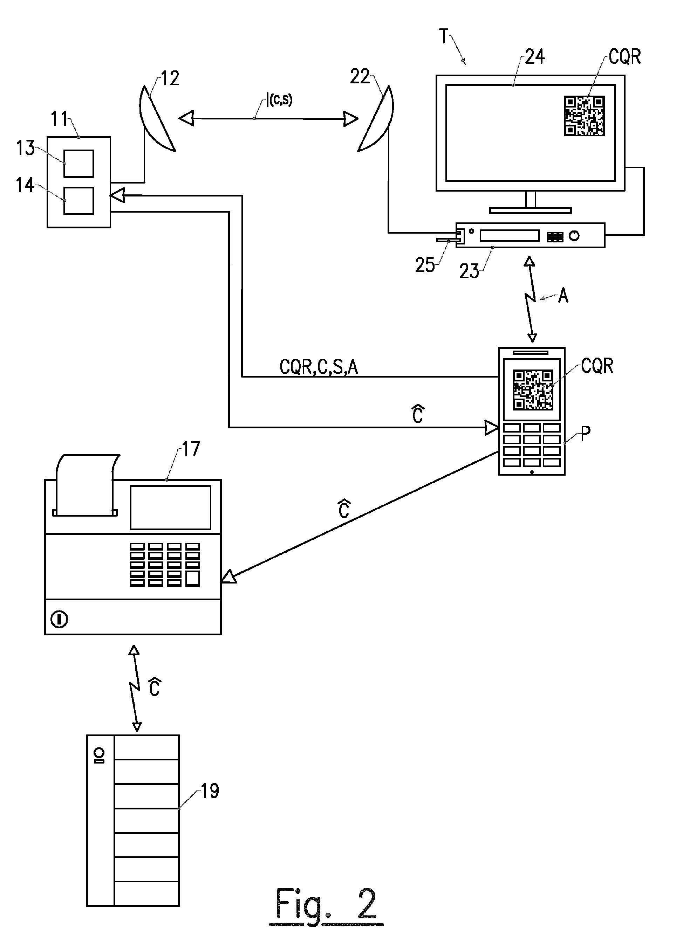

Dans une autre variante de réalisation illustrée sur la figure 2, le serveur 11 peut générer un coupon de réduction électronique C sur un produit ou service identifié. On entend par « coupon électronique », un ensemble de données numériques attestant un droit à l'utilisateur qui le détient tel qu'une réduction sur un achat particulier, ou un cadeau offert pour un achat particulier, etc. Ces données comprennent notamment des données d'identification du coupon C. Ce dernier est généré dans le serveur 11 dans un état non valide, c'est-à-dire non utilisable en l'état.

Le coupon C est associé à un signal de synchronisation S définissant une période d'activation dudit coupon. Ce signal de synchronisation S comporte une ou plusieurs informations temporelles se présentant sous la forme de données numériques. Par exemple, une donnée « heure de début » et une donnée « heure de fin », ou une donnée « heure de début » et une donnée « durée », ou plusieurs couples de données « heure de début » et « heure de fin » ou « heure de début » et « durée », ou toute autre donnée ou groupe de données convenant à l'homme du métier. Le coupon C et le signal de synchronisation S sont intégrés au sein du flux I émis vers le récepteur 23.

Lorsque le récepteur 23 reçoit le flux I, il génère le Code QR en le codant avec les données relatives au coupon C et au signal de synchronisation S. Le Code QR est donc codé avec : - l'adresse URL du serveur distant 11, - l'identifiant associé au récepteur 23, - l'identifiant associé la carte à puce 25, - des instructions pour accéder à un service proposé par ledit serveur distant, - le coupon C, - le signal de synchronisation S. Lorsqu'un tel code QR est affiché sur l'écran 24, un message est également émis de sorte que l'utilisateur sache qu'un coupon de réduction est intégré dans le Code QR. Le message suivant peut par exemple être affiché : *« si vous souhaitez bénéficier d'un bon de réduction sur le produit X, scanner le Code QR ».*

L'acquisition du coupon C est conditionnée par la réception d'un signal d'activation A. L'utilisateur doit en effet déclencher un signal d'activation A durant l'occurrence du signal de synchronisation S pour autoriser l'acquisition coupon C. Le signal d'activation A est initié par un moyen d'activation. En particulier, le signal d'activation A est avantageusement généré en exécutant les instructions d'un programme enregistré dans le terminal P en réponse au scannage du Code QR. Le scannage du Code QR entraine ainsi automatiquement le déclenchement du signal d'activation A.

Le terminal P transfère vers le serveur 11 les données d'identification du coupon C, les données contenues dans le signal d'activation A (notamment l'heure et la date de son émission), et les données contenues dans le signal de synchronisation S. L'ensemble de ces données peut être assimilé aux données d'instructions pour accéder au service proposé par le serveur 11. Ce transfert est réalisé en réponse au déchiffrage du Code QR par le terminal P, et donc simultanément au transfert des autres données concernant les identifiants associés au récepteur 23 et à la carte à puce 25.

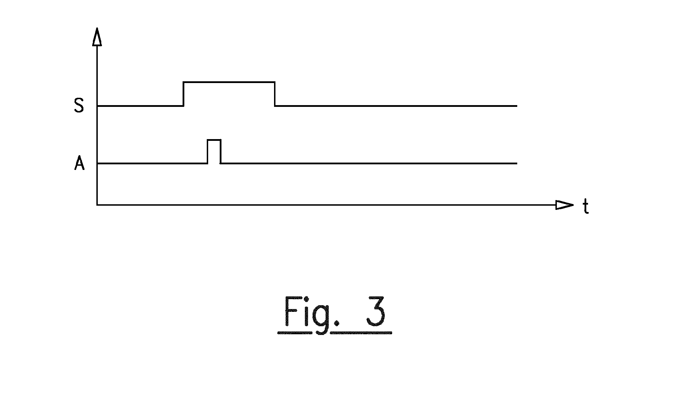

Le serveur 11 compare les données contenues dans le signal d'activation A et les données contenues dans le signal de synchronisation S : dans la mesure où il est établi que le signal d'activation A a été généré durant l'occurrence du signal de synchronisation S (figure 3), le coupon C est validé. Dans le cas contraire, le coupon n'est pas validé et un message d'erreur (par exemple sous forme de SMS ou de mail) peut être transmis au récepteur 23 et/ou au terminal P. Cette non validation peut par exemple intervenir lorsqu'un utilisateur enregistre une émission de télévision où un Code QR est affiché et qu'il la visionne ultérieurement. Si l'utilisateur scanne le code QR lors de cette vision ultérieure, le signal d'activation A ne sera plus généré durant l'occurrence du signal de synchronisation S.

Le coupon activé C est alors transféré au terminal P qui le stocke dans une zone mémoire. De manière à éviter la duplication de ce coupon Ĉ et donc des droits qui lui sont associés, il peut être intéressant de le sécuriser. Ainsi, une fois le coupon Ĉ validé, le serveur 11 peut lui associer une signature numérique permettant son authentification. Le coupon Ĉ signé numériquement devient alors unique et infalsifiable. La signature numérique est générée par une fonction de chiffrement basée sur un algorithme de chiffrement numérique utilisant une clé privée de chiffrement et pouvant comprendre des étapes de hachage au moyen de fonction de hachage de type MD5 ou SHA. De manière à augmenter la sécurisation du coupon Ĉ, le fichier peut être également être crypté.

Toujours dans l'objectif d'accroître la sécurisation du coupon Ĉ validé, le serveur 11 peut également comprendre un moyen pour horodater ledit coupon. Cet horodatage permet ultérieurement de vérifier que le coupon a bien été acquis au moment où il devait l'être. L'horodatage comprend des informations relatives au moment d'acquisition du coupon C, lesdites informations se présentant sous la forme de données numériques. Ces dernières peuvent, par exemple, être une donnée « date » et une donnée « heure ».

Le terminal P peut à son tour transférer le coupon Ĉ validé à un terminal de paiement 17. Rappelons ici que le coupon Ĉ en cause est un bon de réduction, une offre promotionnelle, ou autre. Ainsi, le terminal de paiement 17 analyse les informations enregistrées dans le coupon Ĉ et il calcule le montant de ce qui reste à payer compte tenu de la réduction spécifiée. En pratique, un moyen d'analyse équipant le terminal de paiement 17, comporte un processeur qui, lorsqu'il exécute les étapes d'un programme informatique stocké dans une mémoire, est configuré pour : - éventuellement décrypter le coupon Ĉ, - extraire les données contenues dans le coupon Ĉ relatives au droit conféré à l'utilisateur, - calculer le montant que l'utilisateur doit payer en fonction de ses achats et du droit conféré à l'utilisateur.

Par exemple, si le coupon Ĉ contient un « bon de réduction de Z% sur le produit X ». Si l'utilisateur achète le produit X ayant un prix annoncé Y, et que ledit utilisateur transfert le coupon Ĉ de son terminal P vers le terminal de paiement 17, ce dernier calcule le montant que l'utilisateur doit payer en déduisant Z% du prix annoncé Y du produit X.

Éventuellement, avant de procéder à l'encaissement, le terminal de paiement 17 peut procéder à certaines vérifications. Ces vérifications peuvent être effectuées en local par le terminal de paiement 17, ou auprès d'un serveur distant 19 connecté audit terminal de paiement via un réseau de télécommunication. Ces vérifications concernent une ou plusieurs des opérations suivantes : - vérification de l'authenticité du coupon électronique Ĉ, - vérification de l'unicité du coupon électronique Ĉ, -enregistrement de l'utilisation du coupon électronique Ĉ, - confirmation de la validité du coupon électronique Ĉ.

La vérification de l'authenticité du coupon C consiste à vérifier la validité de la signature numérique. En pratique, un moyen de vérification équipant le terminal de paiement 17 ou le serveur distant 19, comporte un processeur qui, lorsqu'il exécute les étapes d'un programme informatique stocké dans une mémoire, est configuré pour : - extraire la signature numérique du coupon électronique (C), - vérifier l'authenticité de la signature numérique, en pratique au moyen d'une fonction de déchiffrement et de la clef privée de chiffrement.

La vérification de l'unicité du coupon Ĉ consiste à contrôler que ledit coupon n'a pas déjà été utilisé. En pratique, un moyen de vérification équipant le terminal de paiement 17 ou le serveur distant 19, comporte un processeur qui, lorsqu'il exécute les étapes d'un programme informatique stocké dans une mémoire, est configuré pour vérifier que le coupon Ĉ n'est pas répertorié dans une base de données répertoriant les coupons électroniques déjà utilisés.

L'enregistrement de l'utilisation du coupon Ĉ consiste à enregistrer ledit coupon dans une base de données de manière à ce qu'il ne puisse plus être utilisé ultérieurement. En pratique, un moyen d'enregistrement équipant le terminal de paiement 17 ou le serveur distant 19, comporte un processeur qui, lorsqu'il exécute les étapes d'un programme informatique stocké dans une mémoire, est configuré pour enregistrer l'utilisation du coupon Ĉ dans la base de données répertoriant les coupons électroniques déjà utilisés.

La confirmation de la validité du coupon Ĉ consiste à autoriser le terminal de paiement 17 à utiliser ledit coupon pour générer la facture lorsque ledit coupon est authentique et qu'il n'a jamais été utilisé. En définitive, le terminal de paiement 17 ne peut calculer le montant en fonction du droit conféré à l'utilisateur que si le coupon Ĉ est valide, dans le cas contraire, le prix à payer par l'utilisateur étant le prix annoncé Y du produit X. En pratique, un moyen de validation équipant le terminal de paiement 17 ou le serveur distant 19, comporte un processeur qui, lorsqu'il exécute les étapes d'un programme informatique stocké dans une mémoire, est configuré pour donner l'ordre de calculer le montant en fonction du droit conféré à l'utilisateur lorsque le coupon Ĉ est authentique et qu'il n'a jamais été utilisé.

Les exemples de réalisation de l'invention présentés ci-dessus ont été choisis eu égard à leur caractère concret. Il ne serait cependant pas possible de répertorier de manière exhaustive tous les modes de réalisation que recouvre cette invention. En particulier, toute étape ou tout moyen décrit peut être remplacé par une étape ou un moyen équivalent sans sortir du cadre de la présente invention.

## Revendications

1. Procédé pour accéder à un service proposé par un serveur distant (11), lequel serveur est configuré pour émettre un flux d'informations numériques (I) à destination d'un récepteur numérique (23) d'un téléviseur numérique (T), ledit récepteur étant associé à un identifiant unique, ledit procédé comprend les étapes consistant à :
- intégrer dans une carte à puce (25) des droits d'accès propres à un utilisateur, laquelle carte est associée à un identifiant unique,
- associer de manière exclusive la carte à puce (25) et le récepteur numérique (23) de manière à ce que ladite carte puisse uniquement communiquer avec ledit récepteur, l'identifiant unique de ladite carte étant associé à l'identifiant unique dudit récepteur,
- connecter la carte à puce (25) au récepteur numérique (23) de sorte que ledit récepteur traite le flux d'informations numériques (I) en fonction des droits intégrés dans ladite carte,
**se caractérisant par le fait que** le procédé comprend en outre les étapes suivantes :
- générer un Code QR (CQR) en exécutant les instructions d'un programme enregistré dans le récepteur numérique (23), et en codant ledit Code QR avec :-l'adresse URL du serveur distant (11), - les identifiants associés au récepteur (23) et à la carte à puce (25), - les instructions pour accéder au service proposé par ledit serveur distant, lesdits identifiants et lesdites instructions se présentant sous forme de données numériques,
- afficher le Code QR (CQR) généré sur un écran (24) du téléviseur numérique (T),
- scanner le Code QR (CQR) affiché sur l'écran (24) par l'intermédiaire d'un terminal mobile (P),
- déchiffrer le Code QR (CQR) scanné en exécutant les instructions d'un programme enregistré dans le terminal mobile (P), lequel déchiffrage entraine la connexion automatique dudit terminal à l'adresse URL du serveur distant (11) et le transfert à ce dernier, des données numériques concernant : les identifiants associés au récepteur (23) et à la carte à puce (25) et les instructions pour accéder au service proposé,
- vérifier, dans le serveur distant (11), les identifiants associés à la carte à puce (25) et au récepteur numérique (23),
- accéder au service proposé par le serveur distant (11) après avoir contrôlé que l'identifiant unique de la carte à puce (25) est bien associé à l'identifiant unique du récepteur numérique (23), ou émettre un message d'erreur audit récepteur et/ou au terminal mobile (P) si les identifiants ne correspondent pas.

2. Procédé selon la revendication 1, consistant à :
- intégrer dans le flux d'informations numériques (I) à destination du récepteur numérique (23), un signal d'activation,
- générer le Code QR (CQR) dès que le récepteur numérique (23) réceptionne le signal d'activation.

3. Procédé selon l'une des revendications 1 ou 2, dans lequel après avoir vérifié les identifiants associés au récepteur numérique (23) et à la carte à puce (25), le serveur distant (11) transfère audit récepteur des droits pour que ledit récepteur mette en oeuvre le service proposé, lesquels droits se présentent sous forme de données numériques intégrées dans le flux d'informations numériques (I) émis par ledit serveur distant à destination dudit récepteur.

4. Procédé selon la revendication 3, dans lequel le flux d'informations numériques (I) émis par le serveur distant à destination du récepteur numérique (23) contient des informations protégées ne pouvant pas être normalement affichées sur l'écran (24) du téléviseur numérique (T), l'affichage étant autorisé en exécutant les instructions d'un programme enregistré dans ledit récepteur en réponse à la réception des droits par ledit récepteur.

5. Procédé selon l'une des revendications 1 ou 2, dans lequel après avoir vérifié les identifiants associés au récepteur numérique (23) et à la carte à puce (25), le serveur distant (11) transfère audit récepteur des renseignements pour la mise en oeuvre du service proposé, lesdits renseignements étant ensuite affichés par le récepteur (23) sur l'écran (24) du téléviseur numérique (T), lesquels renseignements se présentent sous forme de données numériques intégrées dans le flux d'informations numériques (I) émis par ledit serveur distant à destination dudit récepteur.

6. Procédé selon l'une des revendications 1 ou 2, dans lequel après avoir vérifié les identifiants associés au récepteur numérique (24) et à la carte à puce (25), le serveur distant (11) transfère au terminal mobile (P) des droits pour que ledit terminal mette en oeuvre le service proposé, le transfert des droits étant réalisé au travers d'un réseau internet, lesdits droits transférés se présentant sous forme de données numériques.

7. Procédé selon l'une des revendications précédentes, consistant à :
- générer un coupon de réduction électronique (C) sur un produit ou service identifié, dans un état non valide, sous forme de données numériques, lesdites données comprenant des données d'identification dudit coupon,
- associer ledit coupon (C) à un signal de synchronisation (S) définissant une période d'activation dudit coupon,
- intégrer ledit coupon et ledit signal de synchronisation (S) au sein du flux d'informations numériques (I) émis vers le récepteur numérique (23),
- générer le Code QR (CQR) en le codant avec les données relatives au coupon (C) et au signal de synchronisation (S) reçues par le récepteur numérique (23), et avec : - l'adresse URL du serveur distant (11), - les identifiants associés au récepteur (23) et à la carte à puce (25), - les instructions pour accéder au service proposé par ledit serveur distant,
- générer un signal d'activation (A) en exécutant les instructions d'un programme enregistré dans le terminal mobile en réponse au scannage du Code QR (CQR) par le terminal mobile (P),
- transférer vers le serveur distant (11) les données d'identification du coupon (C), les données contenues dans le signal d'activation (A), et les données contenues dans le signal de synchronisation (S), ledit transfert étant réalisé en réponse au déchiffrage du Code QR (CQR) par le terminal mobile (P),
- comparer les données contenues dans le signal d'activation (A) et les données contenues dans le signal de synchronisation (S), et dans la mesure où il est établi que ledit signal d'activation a été généré durant l'occurrence dudit signal de synchronisation: valider ledit coupon (C).

8. Système d'accès à un service proposé par un serveur distant (11), lequel serveur est configuré pour émettre un flux d'informations numériques (I) à destination d'un récepteur numérique (23) d'un téléviseur numérique (T), ledit récepteur étant associé à un identifiant unique, ledit système comprenant :
- une carte à puce (25) dans laquelle sont intégrés des droits d'accès propres à un utilisateur, laquelle carte est associée à un identifiant unique, laquelle carte est associée au récepteur numérique (23) de manière à ce que ladite carte puisse uniquement communiquer avec ledit récepteur, l'identifiant unique de ladite carte étant associé à l'identifiant unique dudit récepteur,
- un moyen pour connecter la carte à puce (25) au récepteur numérique (23) de sorte que ledit récepteur traite le flux d'informations numériques (I) en fonction des droits intégrés dans ladite carte,
**se caractérisant par le fait que :**
- le récepteur numérique (25) comprend :
o un moyen pour générer un Code QR (CQR), et pour le coder avec :-l'adresse URL du serveur distant (11), - les identifiants associés au récepteur (23) et à la carte à puce (25), - les instructions pour accéder au service proposé par ledit serveur distant, lesdits identifiants et lesdites instructions se présentant sous forme de données numériques,
o un moyen pour afficher le Code QR (CQR) généré sur un écran (24) du téléviseur numérique (T),
- un terminal mobile (P) comprenant :
o un moyen pour scanner le Code QR (CQR) affiché sur l'écran (24),
o un moyen pour déchiffrer le Code QR (CQR) scanné,
o un moyen pour connecter automatiquement le terminal (P) à l'adresse URL du serveur distant (11) et pour transfert à ce dernier, des données numériques concernant : les identifiants associés au récepteur (23) et à la carte à puce (25) et les instructions pour accéder au service proposé,
- le serveur distant (11) comprenant un moyen pour vérifier les identifiants associés à la carte à puce (25) et au récepteur numérique (23), l'accès au service proposé par ledit serveur étant réalisé après avoir contrôlé que l'identifiant unique de la carte à puce (25) est bien associé à l'identifiant unique du récepteur numérique (23), un message d'erreur étant émit par ledit serveur audit récepteur et/ou au terminal mobile (P) si les identifiants ne correspondent pas.
